(19) Europäisches Patentamt / European Patent Office / Office européen des brevets

(11) **EP 4 145 354 A1**

(12) **EUROPEAN PATENT APPLICATION**

(43) Date of publication:
**08.03.2023 Bulletin 2023/10**

(21) Application number: **22192340.2**

(22) Date of filing: **26.08.2022**

(51) International Patent Classification (IPC):
**G06N 3/08** (2006.01)     **G06N 3/04** (2006.01)

(52) Cooperative Patent Classification (CPC):
**G06N 3/084;** G06N 3/045

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2021 US 202117464824**

(71) Applicant: **NXP B.V.**
**5656 AG Eindhoven (NL)**

(72) Inventors:
• **Widdershoven, Franciscus Petrus**
  **5656AG Eindhoven (NL)**
• **Fuks, Adam**
  **5656AG Eindhoven (NL)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **EFFICIENT AND ACCURATE WEIGHT QUANTIZATION FOR NEURAL NETWORKS**

(57)     Various embodiments relate to a method for producing a plurality of weights for a neural network, wherein the neural network includes a plurality of layers, including: receiving a definition of the neural network including the number of layers and the size of the layers; and training the neural network using a training data set including: segmenting N weights of the plurality of weights into I weight sub-vectors $\vec{w}^{(i)}$ of dimension K = N/I; applying constraints that force sub-vectors $\vec{w}^{(i)}$ to concentrate near a (K-1)-dimensional single-valued hypersurface surrounding the origin; and quantizing sub-vectors $\vec{w}^{(i)}$ to a set of discrete K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

FIG. 10

EP 4 145 354 A1

**Description**

**TECHNICAL FIELD**

Various exemplary embodiments disclosed herein relate generally to efficient and accurate weight quantization for neural networks.

**BACKGROUND**

Weights of neural networks that were trained without constraints tend to have gaussianlike distributions. This has been reported many times in literature. Mild constraints can be applied to regularize the distributions, e.g., reduce the probability of extreme outliers. Strong constraints can be applied to force weights to cluster around intended discrete quantization levels. This is typically done by adding additional loss terms to the training loss function that create barriers of higher training loss between the clusters. However, during training, weights that would need to move from one cluster to another, to compensate for the effect of other weights being pulled closer into their clusters, can get stuck in less favorable clusters. This manifests itself as many additional local minima in the training loss function. As a result, training runs typically get stuck in one of these many local minima. After subsequent rounding to the nearest discrete quantization level, such weights deviate strongly from their optimal values. For coarse quantization the resulting accuracy loss usually is unacceptably high.

**SUMMARY**

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a method for producing a plurality of weights for a neural network, wherein the neural network includes a plurality of layers, including: receiving a definition of the neural network including the number of layers and the size of the layers; and training the neural network using a training data set including: segmenting N weights of the plurality of weights into I weight sub-vectors $\vec{w}^{(i)}$ of dimension K = N/I; applying constraints that force sub-vectors $\vec{w}^{(i)}$ to concentrate near a (K-1)-dimensional single-valued hypersurface surrounding the origin that is defined by a single-valued smooth function that returns the distance to the origin as a function of the direction in K-dimensional space; and quantizing sub-vectors $\vec{w}^{(i)}$ to a set of discreet K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

Further various embodiments relate to a data processing system comprising instructions embodied in a non-transitory computer readable medium, the instructions producing a plurality of weights for a neural network, wherein the neural network includes a plurality of layers, the instructions, including: instructions for receiving a definition of the neural network including the number of layers and the size of the layers; and instructions for training the neural network using a training data set including: instructions for segmenting N weights of the plurality of weights into I weight sub-vectors $\vec{w}^{(i)}$ of dimension K = N/I; instructions for applying constraints that force sub-vectors $\vec{w}^{(i)}$ to concentrate near a (K-1)-dimensional single-valued hypersurface surrounding the origin that is defined by a single-valued smooth function that returns the distance to the origin as a function of the direction in K-dimensional space; and instructions for quantizing sub-vectors $\vec{w}^{(i)}$ to a set of discreet K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

Various embodiments are described, wherein the hypersurface is a hyper-sphere centered at the origin.

Various embodiments are described, wherein

$$\vec{w}^{(i)} = a \begin{pmatrix} \cos(\varphi^{(i)}) \\ \sin(\varphi^{(i)}) \end{pmatrix},$$

where $a$ is the radius of a circle that is a 1-dimensional hyper-sphere in a 2-dimensional plane and $\varphi^{(i)}$ is angle of the sub-vector $\vec{w}^{(i)}$.

Various embodiments are described, wherein

$$\vec{w}^{(i)} = a \begin{pmatrix} \cos\left(\theta^{(i)}\right) \\ \sin\left(\theta^{(i)}\right)\cos\left(\varphi^{(i)}\right) \\ \sin\left(\theta^{(i)}\right)\sin\left(\varphi^{(i)}\right) \end{pmatrix},$$

where $a$ is the radius of a sphere that is a 2-dimensional hyper-sphere in a 3-dimensional space and $\theta^{(i)}$ and $\varphi^{(i)}$ are angles of the sub-vector $\vec{w}^{(i)}$.

Various embodiments are described, wherein

$$\vec{w}^{(i)} = a \begin{pmatrix} \cos\left(\psi^{(i)}\right) \\ \sin\left(\psi^{(i)}\right)\cos\left(\theta^{(i)}\right) \\ \sin\left(\psi^{(i)}\right)\sin\left(\theta^{(i)}\right)\cos\left(\varphi^{(i)}\right) \\ \sin\left(\psi^{(i)}\right)\sin\left(\theta^{(i)}\right)\sin\left(\varphi^{(i)}\right) \end{pmatrix},$$

where $a$ is the radius of the hypersphere and $\theta^{(i)}$, $\varphi^{(i)}$, and $\psi^{(i)}$ are angles of the sub-vector $\vec{w}^{(i)}$.

Various embodiments are described, wherein quantizing sub-vectors $\vec{w}^{(i)}$ includes binarizing each element the sub-vectors $\vec{w}^{(i)}$.

Various embodiments are described, wherein quantizing sub-vectors $\vec{w}^{(i)}$ includes applying reduced ternarization of each element the sub-vectors $\vec{w}^{(i)}$ to produce quantization vectors $\vec{q}^{(i)}$ wherein $\vec{q}^{(i)} \in Q^{(K)}$, $Q^{(K)} \subset Q_T^{(K)}$ , and $Q_T^{(K)} = \{-1,0,+1\}^K$ and wherein only members $\vec{q} \in Q_T^{(K)}$ are retained in $Q^{(K)}$ that are close to a common hyper-sphere centered at the origin .

Various embodiments are described, wherein K = 2, and, $Q^{(2)} = \{-1,0,+1\}^2 \backslash \{0,0\}$.

Various embodiments are described, further comprising encoding the values ($q_1$, $q_2$) of {(1,0), (1,1), (0, 1), (-1, 1), (-1,0), (-1,-1), (0,-1), (1,-1)} to three bit representations (($b_2 b_1 b_0$) of {101, 011, 111, 010, 110, 000, 100, 001} respectively.

Various embodiments are described, wherein the following pseudo code calculates the contribution of a 2-dimensional input sub-vector $\vec{x}$ to the accumulating dot-product variable sum:

```
if b2=0 then
        if b1=0 then sum=sum-x1 else sum=sum+x1 end
        if b0=0 then sum=sum-x0 else sum=sum+x0 end
elseif b1=b0 then
        if b1=0 then sum=sum-x1 else sum=sum+x1 end
else
        if b0=0 then sum=sum-x0 else sum=sum+x0 end
end.
```

Various embodiments are described, wherein K = 4, and, $Q^{(4)} = \{-1,0,+1\}^4 \backslash \{(0,0,0,0), \{-1,+1\}^4\}$.

Various embodiments are described, wherein quantizing sub-vectors $\vec{w}^{(i)}$ includes calculating

$$\vec{q}^{(i)} = \underset{\vec{q} \in Q}{\operatorname{argmin}}\left\| s\vec{q} - \vec{w}^{(i)} \right\|, \quad i = 1, \dots, I,$$

where s is a common scaling factor, and

$$s = \frac{\sum_{i=1}^{I} \vec{q}^{(i)} \cdot \vec{w}^{(i)}}{\sum_{i=1}^{I} \left\| \vec{q}^{(i)} \right\|^2}.$$

Various embodiments are described, wherein quantizing sub-vectors $\vec{w}^{(i)}$ includes calculating

$$\vec{q}^{(i)} = \underset{\vec{q} \in Q}{\mathrm{argmin}} \left\| s\vec{q} - \vec{w}^{(i)} \right\|, \quad i = 1, \dots, I,$$

where s is a common scaling factor, and

$$s = a \frac{\int_{U_{K-1}} \vec{q}(\vec{u}, s) \cdot \vec{u}^{(i)} \, d^{K-1}u}{\int_{U_{K-1}} \|\vec{q}(\vec{u}, s)\|^2 \, d^{K-1}u}.$$

Various embodiments are described, where s is calculated numerically.

Various embodiments are described, wherein K = 2, the neural network includes a plurality of MxM kernels, where M is an odd number, and MxM sub-vectors $\vec{w}^{(2)}$ each include MxM first sine weighted elements from a first MxM kernel and second cosine weighted elements from a second MxM kernel.

Various embodiments are described, wherein the neural network includes an MxM kernel, where M is an odd number, the central value of the MxM kernel is removed, and the remaining MxM-1 values are grouped into (MxM-1)/2 sub-vectors $\vec{w}^{(2)}$ consisting of pairs of opposite values about the central value.

## BRIEF DESCRIPTION OF THE DRAWINGS

In order to better understand various exemplary embodiments, reference is made to the accompanying drawings, wherein:

FIG. 1A illustrates a plot showing the nine different value pairs ($q_1$, $q_2$) of $Q_T^{(2)}$ according to equation 19;
FIG. 1B illustrates a plot of $Q^{(2)}$ according to equation 21;
FIG. 1C illustrates a favorable three-bit code that may be used for labeling the eight members (points) of $Q^{(2)}$;
FIG. 2 illustrates the frequency responses $|H(f)|^2$ of the 26 filter bands used in the TCN;
FIG. 3 shows the weight pairs of the 18 output channels of layer 3 of a trained unconstrained TCN before and after binarization with optimized binary quantization levels;
FIG. 4 illustrates the weight pairs of the 18 output channels of layer 3 of the trained constrained TCN before and after binarization with optimized quantization levels;
FIG. 5 illustrates the weight pairs of the 18 output channels of layer 3 of the trained constrained TCN before and after reduced ternarization with optimized quantization levels;
FIG. 6 illustrates how the train and test losses (cross entropy) increase quickly when the layers of a trained unconstrained TCN are successively binarized with intermediate retraining;
FIG. 7 illustrates the train and test losses after constraining successive layers of a trained unconstrained TCN to "Circular" weight pairs with intermediate retraining;
FIG. 8 illustrates the train and test losses after binarizing successive layers of a trained constrained TCN with intermediate retraining;
FIG. 9 illustrates the train and test losses after reduced ternarizing successive layers of a trained constrained TCN with intermediate retraining;
FIG. 10 illustrates a method for producing a plurality of weights for a neural network, including a plurality of layers; and
FIG. 11 illustrates an exemplary hardware diagram 1100 for implementing the method of generating the constrained weights for the neural network or for implementing the neural network

To facilitate understanding, identical reference numerals have been used to designate elements having substantially the same or similar structure and/or substantially the same or similar function.

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.,* "or else" or "or in the alternative"). Also, the various embodiments described herein are not necessarily mutually exclusive, as some embodiments can be combined with one or more other embodiments to form new embodiments.

According to embodiments of weight quantization for neural networks described herein, it is proposed to segment weight vectors (where the elements of a weight vector include weights that project into the same output channel of a neural network layer) of dimension $N$ into $I$ weights sub-vectors $\vec{w}^{(i)}$ of smaller dimension $K = N/I$, where it is assumed that $N$ is an integer multiple of K, and it is further proposed to apply alternative constraints that force $\vec{w}^{(i)}$, $i = 1,2, ..., I$, to concentrate near (where near means $\sigma_R \ll a$) or at a $(K - 1)$-dimensional hypersphere centered at the origin, with a radius $a$ that minimizes the least mean square (LMS) radial distance

$$\sigma_R^2 = \frac{1}{I}\sum_{i=1}^{I}\left(a - w^{(i)}\right)^2 \tag{1}$$

of the $\vec{w}^{(i)}$ to the hypersphere, where

$$w^{(i)} = \left\|\vec{w}^{(i)}\right\| = \sqrt{\sum_{k=1}^{K}\left(w_k^{(i)}\right)^2} \tag{2}$$

is the length of $\vec{w}^{(i)}$.

The hypersphere may be generalized to a $(K - 1)$-dimensional single-valued hypersurface surrounding the origin that is defined by a single-valued smooth function that returns the distance to the origin as a function of the direction in K-dimensional space.

Next, the sub-vectors $\vec{w}^{(i)}$ are quantized to a set of discrete $K$-dimensional quantization vectors distributed in a regular pattern in the vicinity of the hypersphere, where each $\vec{w}^{(i)}$ is mapped onto its nearest quantization vector. This way the least mean squares (LMS) quantization error (i.e., the LMS distance between a sub-vector and its corresponding quantization vector) as well as the maximum quantization error are kept small. The number of quantization vectors and the structure of the regular pattern are designed in such a way that they can be encoded efficiently (i.e., with the fewest possible number of bits), and that the operation of multiplying inputs of a given neural network layer with quantization vectors has a low computational complexity.

A first known method of applying constraints on the weights of the neural network will first be described. Weight vectors may be forced to concentrate near the hypersphere by adding a loss term to the training loss function:

$$\mathcal{L} = \mathcal{L}_0 + \lambda_R \sigma_R^2 \tag{3}$$

where $\mathcal{L}_0$ is the original loss function, and $\lambda_R$ is the hyperparameter of the additional loss term. The optimal radius $a$ that satisfies $\frac{\partial \sigma_R^2}{\partial a} = 0$ can be solved either directly

$$a = \frac{1}{I}\sum_{i=1}^{I} w^{(i)} \tag{4}$$

or learned during training, e.g., using stochastic gradient descend (SGD) with

$$\frac{\partial \mathcal{L}}{\partial a} = -2\lambda_R \left(a - \frac{1}{I}\sum_{i=1}^{I} w^{(i)}\right) \tag{5}$$

In both cases,

$$\nabla_{\overrightarrow{w}^{(i)}}\mathcal{L} = \nabla_{\overrightarrow{w}^{(i)}}\mathcal{L}_0 - \lambda_R \frac{2}{I}\left(\frac{a}{w^{(i)}} - 1\right)\overrightarrow{w}^{(i)} \tag{6}$$

can be used for gradient descend training of the constrained neural network.

An embodiment of a method of applying constraints on the weight of the neural network will now be described. $K$-dimensional weight sub-vectors may be designed to concentrate at the hypersphere by expressing them in ($K$ - 1)-dimensional hyper-spherical coordinates. For example, for $K = 2,3,4$, respectively the following weights may be defined:

$$\overrightarrow{w}^{(i)} = a\begin{pmatrix} \cos\left(\varphi^{(i)}\right) \\ \sin\left(\varphi^{(i)}\right) \end{pmatrix} \tag{7}$$

$$\overrightarrow{w}^{(i)} = a\begin{pmatrix} \cos\left(\theta^{(i)}\right) \\ \sin\left(\theta^{(i)}\right)\cos\left(\varphi^{(i)}\right) \\ \sin\left(\theta^{(i)}\right)\sin\left(\varphi^{(i)}\right) \end{pmatrix} \tag{8}$$

$$\overrightarrow{w}^{(i)} = a\begin{pmatrix} \cos\left(\psi^{(i)}\right) \\ \sin\left(\psi^{(i)}\right)\cos\left(\theta^{(i)}\right) \\ \sin\left(\psi^{(i)}\right)\sin\left(\theta^{(i)}\right)\cos\left(\varphi^{(i)}\right) \\ \sin\left(\psi^{(i)}\right)\sin\left(\theta^{(i)}\right)\sin\left(\varphi^{(i)}\right) \end{pmatrix} \tag{9}$$

where $a$ is the radius of the hypersphere and the angles $\psi^{(i)}$, $\theta^{(i)}$, and $\varphi^{(i)}$ determine the direction of $\overrightarrow{w}^{(i)}$. It is noted that in equation (9) using four dimensions, that other coordinate systems may be used as well such as for example Hopf coordinates. That is, all $\overrightarrow{w}^{(i)}$ have their own angles, but share the same radius. Generalized to a $M^{(l)} \times N^{(l)}$ weight matrix of layer $l$:

$$\begin{pmatrix} W^{(l)}_{m,2i-1} \\ W^{(l)}_{m,2i} \end{pmatrix} = a^{(l)}_m \begin{pmatrix} \cos\left(\varphi^{(l)}_{m,i}\right) \\ \sin\left(\varphi^{(l)}_{m,i}\right) \end{pmatrix}, \quad m = 1,\dots,M^{(l)}, \quad i = 1,\dots,\frac{N^{(l)}}{2} \tag{10}$$

$$\begin{pmatrix} W^{(l)}_{m,3i-2} \\ W^{(l)}_{m,3i-1} \\ W^{(l)}_{m,3i} \end{pmatrix} = a^{(l)}_m \begin{pmatrix} \cos\left(\theta^{(l)}_{m,i}\right) \\ \sin\left(\theta^{(l)}_{m,i}\right)\cos\left(\varphi^{(l)}_{m,i}\right) \\ \sin\left(\theta^{(l)}_{m,i}\right)\sin\left(\varphi^{(l)}_{m,i}\right) \end{pmatrix}, \quad m = 1,\dots,M^{(l)}, \quad i = 1,\dots,\frac{N^{(l)}}{3} \tag{11}$$

$$\begin{pmatrix} W^{(l)}_{m,4i-3} \\ W^{(l)}_{m,4i-2} \\ W^{(l)}_{m,4i-1} \\ W^{(l)}_{m,4i} \end{pmatrix} = a^{(l)}_m \begin{pmatrix} \cos\left(\psi^{(l)}_{m,i}\right) \\ \sin\left(\psi^{(l)}_{m,i}\right)\cos\left(\theta^{(l)}_{m,i}\right) \\ \sin\left(\psi^{(l)}_{m,i}\right)\sin\left(\theta^{(l)}_{m,i}\right)\cos\left(\varphi^{(l)}_{m,i}\right) \\ \sin\left(\psi^{(l)}_{m,i}\right)\sin\left(\theta^{(l)}_{m,i}\right)\sin\left(\varphi^{(l)}_{m,i}\right) \end{pmatrix}, \quad m = 1,\dots,M^{(l)}, \quad i \tag{12}$$

$$= 1,\dots,\frac{N^{(l)}}{4}$$

Further generalization to higher-dimensional weight tensors is trivial (all weights that project into the same output channel share the same radius). The resulting neural network may be trained e.g., with gradient descend by optimizing the radii and angles (and bias vectors, which were not discussed explicitly for brevity) using automatic differentiation, with analytically derived gradients, or in another way. If batch normalization is used, explicit bias vectors are not needed, and the radii may be fixed at 1.

Quantization of the neural network weights will now be described. Next, the trained weight sub-vectors $\vec{w}^{(i)}$ on the hypersphere surfaces are quantized to their nearest discrete quantization vectors

$$\vec{v}^{(i)} = s\vec{q}^{(i)}, \quad i = 1,\dots,I \tag{13}$$

where $s$ is a common scaling factor, and

$$\vec{q}^{(i)} = \underset{\vec{q}\in Q}{\arg\min}\left\|s\vec{q} - \vec{w}^{(i)}\right\|, \quad i = 1,\dots,I \tag{14}$$

(i.e., $\vec{q}^{(i)}$ is equal to the vector $\vec{q}\in Q$ that minimizes the length of the quantization error vector $s\vec{q} - \vec{w}^{(i)}$) is selected from a discrete set $Q$ of reference vectors (the above mentioned pattern is equal to Q). The scaling factor s is determined by minimizing the LMS quantization error

$$\sigma^2_Q = \frac{1}{I}\sum_{i=1}^{I}\sum_{k=1}^{K}\left(sq^{(i)}_k - w^{(i)}_k\right)^2 \tag{15}$$

Solving s from $\dfrac{d\sigma^2_Q}{ds} = 0$ gives

$$s = \frac{\sum_{i=1}^{I}\vec{q}^{(i)}\cdot\vec{w}^{(i)}}{\sum_{i=1}^{I}\left\|\vec{q}^{(i)}\right\|^2} \tag{16}$$

Depending on the structure of $Q$ the selection of the vectors $\vec{q}^{(i)}$ in (14) depends on the value of s (e.g., this is the case for ternarization, but not for binarization). Then it might be necessary to solve (14) and (16) iteratively. Alternatively, the solution of (14) and (16) might be estimated analytically or numerically by making assumptions about the statistical distribution of the spatial directions of the weight sub-vectors $\vec{w}^{(i)}$. For example, a suitable method is to assume that the vectors $\vec{w}^{(i)}$ are uniformly distributed on the hypersphere. Then, for given s the solution of (14) only depends on the direction $\vec{u}^{(i)} = \dfrac{\vec{w}^{(i)}}{w^{(i)}}$ of $\vec{w}^{(i)}$, and s may be solved either analytically or numerically from

$$s = a \frac{\int_{U_{K-1}} \vec{q}(\vec{u}, s) \cdot \vec{u}^{(i)} \, d^{K-1}u}{\int_{U_{K-1}} \|\vec{q}(\vec{u}, s)\|^2 \, d^{K-1}u} \tag{17}$$

where the integrations are done over the (K - 1)-dimensional unit hypersphere $U_{K-1}$, defined by $\|\vec{u}\| = 1$, and $\vec{q}(\vec{u},s)$ returns the solution of (14) for given $\vec{u}$ and s.

To further reduce the loss of the quantized neural network, the scaling factors of the output channels of quantized layers may be retrained (e.g., in conjunction with other remaining non-quantized parameters), using (14) and (16 or 17) as initial values. Because the above described procedure already produces quantized values with small LMS and small maximum quantization errors, it is often sufficient to only retrain the scaling factors while keeping $\vec{q}^{(i)}$ fixed at their initial values.

All weights of the neural network layers may be quantized at once, optionally followed by retraining the remaining non-quantized parameters of the neural network. Alternatively, the weights may be quantized one layer after another or in groups, alternated with retraining. The latter method typically gives a lower final loss because the intermediate retraining after subsequent quantization steps keeps the intermediate training losses low and, thereby, prevents the training steps to get trapped in unfavorable local minima with high loss.

Instead of full retraining on a labeled training dataset, the fully or partially quantized neural network may also be retrained on labels predicted from a calibration dataset by the original neural network before it was quantized.

After the neural network weights have been trained on hypersphere surfaces, binarization may be applied to the neural network weights. Binarization of K-dimensional weight sub-vectors may be done element-wise:

$$q_k^{(i)} = \text{sign}\left(w_k^{(i)}\right), \quad k = 1, \dots, K \tag{18}$$

Alternatively, after the neural network weights have been trained on hypersphere surfaces, reduced ternarization may be applied to the neural network weights. Reduced ternarization may be defined as follows: reduced ternarization in K dimensions, with K even, uses a subset $Q^{(K)} \subset Q_T^{(K)}$ of the K-dimensional ternary set (pattern)

$$Q_T^{(K)} = \{-1, 0, +1\}^K \tag{19}$$

in which only members $\vec{q} \in Q_T$ are retained that are close to a common hypersphere centered at the origin, and which has a cardinality (i.e., number of members) equal to

$$\left| Q^{(K)} \right| = 2^{\frac{3}{2}K} \tag{20}$$

As a consequence, the members of $Q^{(K)}$ may be addressed efficiently with $\frac{3}{2}$ bits per dimension, which is close to the information theoretical number of $\log_2(3) \approx 1.585$ bits per dimension required to encode all members of $Q_T^{(K)}$.

Although there are many possible subsets $Q^{(K)}$ in higher dimensions K, only lowdimensional versions are of practical relevance because they may be implemented with low computational complexity and low hardware requirements. Only two of them have perfect symmetry for all basic symmetry operations like reflections in the origin, swapping of orthogonal coordinate axes, etc. These are $Q^{(2)}$ and $Q^{(4)}$. Each will be discussed below.

2-dimensional reduced ternarization is based on

$$Q^{(2)} = \{-1, 0, +1\}^2 \backslash (0, 0) \tag{21}$$

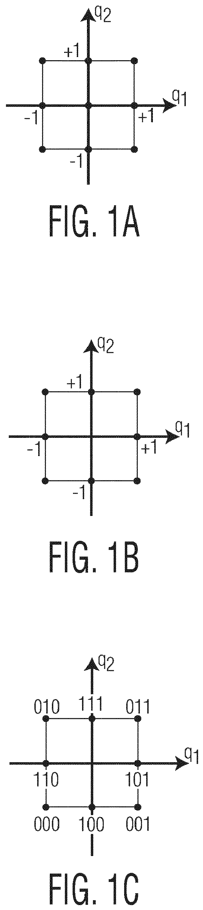

i.e., all members of the 2-dimensional ternary pattern $Q_T^{(2)}$ except the origin (0,0). FIG. 1A illustrates a plot showing the nine different value pairs ($q_1$, $q_2$) of $Q_T^{(2)}$ according to equation 19. FIG. 1B illustrates a plot of $Q^{(2)}$ according to equation 21. FIG. 1C illustrates a favorable three-bit code that may be used for labeling the eight members (points) of $Q^{(2)}$.

While it would require 4 bits to address all 9 members of $Q_T^{(2)}$ (i.e., 2 bits per dimension), it only requires 3 bits to address the 8 members of $Q^{(2)}$ (i.e., 1.5 bits per dimension). The optimal scaling factor, estimated with (17), is s $\approx 0.7885 \times a$. The corresponding quantization errors in the 2 elements of $\vec{v}^{(i)}$ are statistically uncorrelated. Here, "corresponding" refers to the given value of s and to the assumption that vectors $\vec{w}^{(i)}$ are uniformly distributed on a circle of radius $a$, centered at the origin. Up to 4 digits precision, the RMS and maximum values of the 2-dimensional quantization error $\|\vec{v}^{(i)} - \vec{w}^{(i)}\|$ are 0.2782 $a$ and 0.4153 $\times a$, respectively. (For binarization the values are 0.4352 $\times a$ and 0.7330 $\times a$, respectively.) Therefore, with 2-dimensional reduced ternarization the quantized weight sub-vectors $\vec{v}^{(i)}$ will be very close to their unquantized originals $\vec{w}^{(i)}$ on the average, without extreme outliers.

With a suitable coding of the 8 members of $Q^{(2)}$, the coding may be decoded very efficiently, in software as well as in hardware. FIG. 1C shows such a 3-bit code. Note, that the four corners each have $b_2 = 0$. The remaining two bits $b_1$, $b_0$ then form a Grey code when moving counter-clockwise from one corner to the next corner. Similarly, each of the points on the sides have $b_2 = 1$. Again, the remaining two bits $b_1$, $b_0$ then form a Grey code. Further, if $b_2 = 0$ then $b_0$ and $b_1$ directly correspond to the sign of the 1st and 2nd element of $q_k^{(i)}$, respectively where a 0 codes for a minus sign, and a 1 codes for a plus sign. Also, if $b_2 = 1$ and $b_1 b_0$ have odd (even) parity then $b_0$ ($b_1$) corresponds directly to the sign of the 1st (2nd) element of $\vec{q}$, while the other element is 0.

In pseudo code, the contribution of a 2-dimensional input sub-vector $\vec{x}$ to the accumulating dot-product sum may be calculated as:

```
if b₂=0 then

    if b₁=0 then sum=sum-x₁ else sum=sum+x₁ end

    if b₀=0 then sum=sum-x₀ else sum=sum+x₀ end

elseif b₁=b₀ then

    if b₁=0 then sum=sum-x₁ else sum=sum+x₁ end

else

    if b₀=0 then sum=sum-x₀ else sum=sum+x₀ end

end
```

This pseudo code may be implemented very efficiently in hardware for all relevant floating-point, integer, or binary representations of the elements of $\vec{x}$.

Next, 4-dimensional reduced ternarization will be discussed. This is based on

$$Q^{(4)} = \{-1, 0, +1\}^4 \setminus \{(0,0,0,0), \{-1, +1\}^4\} \tag{22}$$

i.e., all members of the 4-dimensional ternary pattern $Q_T^{(4)}$ except the origin (0,0,0,0) and the 16 corners of the 4-dimensional hypercube. This reduces the cardinality from $\left|Q_T^{(4)}\right| = 81$ to $|Q^{(4)}| = 64$. While it requires 7 bits to address the 81 members of $Q_T^{(4)}$ (i.e., 1.75 bit per dimension), it only requires 6 bits to address the 64 members of $Q^{(4)}$ (i.e., 1.5 per dimension). The optimal scaling factor, estimated with (17), is s ≈ 0.5975 × *a*. The corresponding RMS and maximum values of the 4-dimensional quantization error $\|\vec{v}^{(i)} - \vec{w}^{(i)}\|$ are approximately 0.3560 × *a* and 0.5783 × *a*, respectively, (compared to 0.4352 × a and 0.7330 × a, respectively, for binarization.) Therefore, with 4-dimensional reduced ternarization the quantized weight sub-vectors $\vec{v}^{(i)}$ will be very close to their unquantized originals $\vec{w}^{(i)}$ on the average, without extreme outliers. Although more complex than 2-dimensional reduced ternarization, 4-dimensional reduced ternarization has the advantage that it can reach up to 75% sparsity (i.e. up to 3 of the 4 elements of quantized weight sub-vectors from $Q^{(4)}$ can be 0. With 2-dimensional reduced ternarization, the maximum sparsity is 50% (i.e. up to 1 of the 2 elements of quantized weight sub-vectors from $Q^{(2)}$ can be 0. A higher sparsity can be used to reduce the computation load, because products with zero weight elements don't need to be calculated and included in sums. A suitable coding of the 64 members of $Q^{(4)}$ is less straightforward. It might be designed with suitable digital design tools.

An example of applying the above embodiments will now be provided using an Alexa keyword spotter. The advantage of the embodiments will be demonstrated using a temporal convolutional network (TCN) that was trained for Alexa keyword spotting. Training and testing was done with mono audio signals, resampled at 8 kHz with a resolution of 16 bits. Train and test audio traces were 36 hours and 18 hours long, respectively.

"Alexa" target words with an average length of 0.62 seconds were accurately cut from short audio files recorded from 3044 different UK English male and female speakers, and mixed with a variety of spoken English non-target words and sentences. Randomly drawn target and non-target words and sentences with random mean power levels uniformly distributed between 0 and 2 (i.e. with a mean of 1) were inserted in the audio traces, separated by spaces of random length, so that target words and non-target words and sentences cover 7.5% and 37.5% of the audio trace durations, respectively. A variety of background noises (including human-made noises like short utterances, commands, coughing, party babble, etc., and non-human noises like street, car, machine and kitchen sounds, rain, wind, etc.) and music fragments of different genres were inserted at random locations in the audio traces with an exponentially distributed mean power level with a mean of 0.04 (i.e. -14 dB) and a total length equal to that of the audio trace. Consequently, the background noises partially overlap with each other and with the target and non-target words, and cover ~63% of the audio trace's durations, leaving ~37% free of background noise. Consequently, ~2% of the target and non-target words and sentences have a signal/noise ratio less than 1, and drown in the background noise. Train and test audio traces did not contain audio fragments spoken by the same persons, or common sentences or background noise fragments.

16 millisecond long fragments of the train and test audio traces were transformed with a 128-point FFT without overlap. The absolute values of frequency bins 1 - 63 were squared to create a 63-dimensional power spectral density spectrogram with a sampling frequency of 62.5 samples/second, which was used as a 63-dimensional input signal for the TCN.

In the first layer of the TCN, frequency bins were grouped into 26 frequency bands on an approximately Mel-like frequency scale, and with a fixed pass band gain of 10 dB relative to the stop band gain. Selection of the frequency bins in the pass bands was done with 1 bit/bin. So, the weights of the input filter layer were already binarized right from the start. The remaining layers of the TCN were trained to classify the input samples from the spectrogram into target ("Alexa") and non-target samples at 62.5 classifications/second.

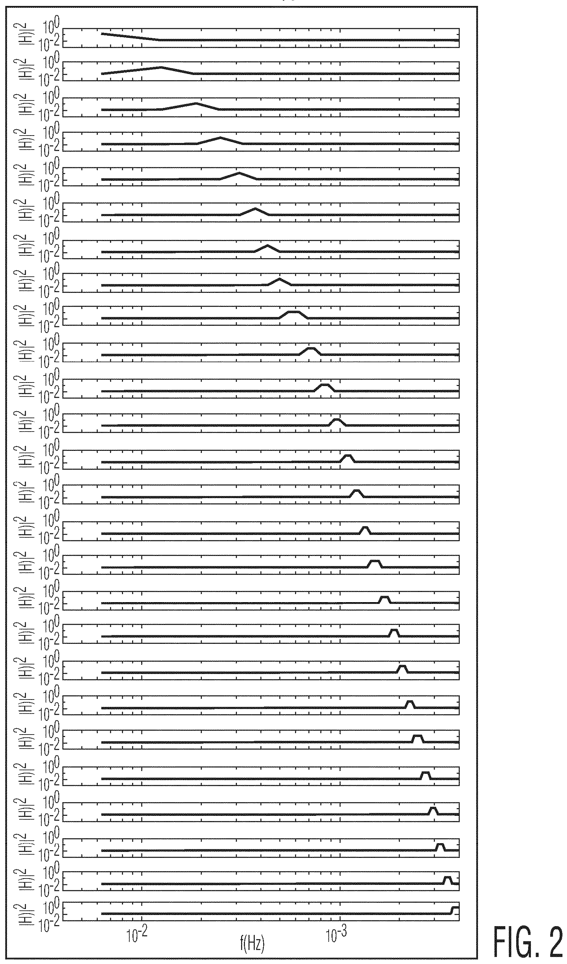

The TCN has a total of 6722 weights, including the 63 × 26 = 1638 fixed 1-bit filter weights in layer 1 (i.e., only 5084 weights are trainable). Table 1 below describes the overall architecture of the TCN, and FIG. 2 illustrates the frequency responses $|H(f)|^2$ of the 26 filter bands used in the TCN.

Table 1: Structure of the Alexa TCN. (Dynamic Softmax: softmax with trainable low-pass input filters.)

| Layer | # Dilation Tabs | Dilation step | #Channels | Activation |
|---|---|---|---|---|
| 1 | 1 | | 26 | Natural Logarithm |
| 2 | 3 | 1 | 22 | Sigmoid |
| 3 | 3 | 2 | 18 | Sigmoid |
| 4 | 3 | 4 | 16 | Sigmoid |
| 5 | 3 | 6 | 14 | Sigmoid |
| 6 | 3 | 8 | 14 | Sigmoid |

(continued)

| Layer | # Dilation Tabs | Dilation step | #Channels | Activation |
|---|---|---|---|---|
| 7 | 2 | 16 | 2 | Dynamic Softmax |

Three different versions of the TCN were trained: unconstrained: 32-bit floating-point weights; constrained: 32-bit floating-point "circular" weights, constrained at circles (equation 10); and quantized, with either binary or 2-dimensional reduced ternary weights.

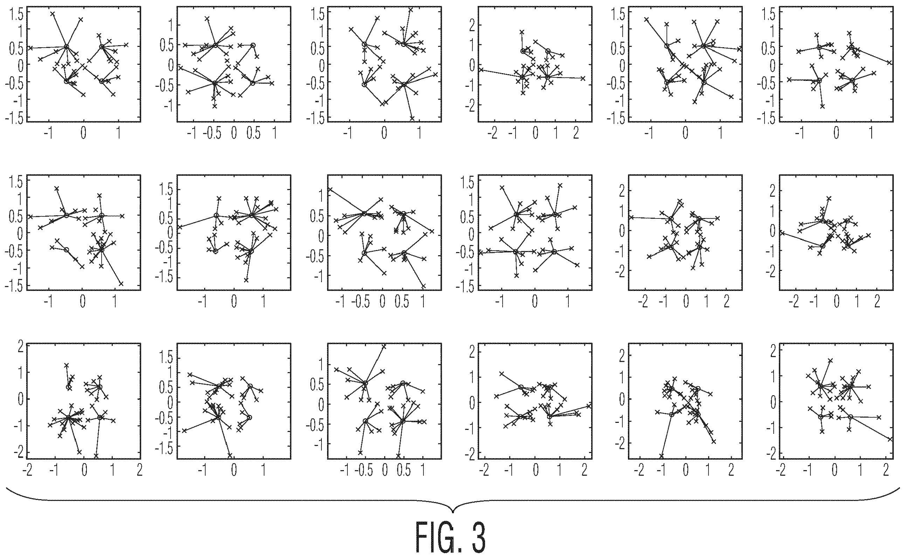

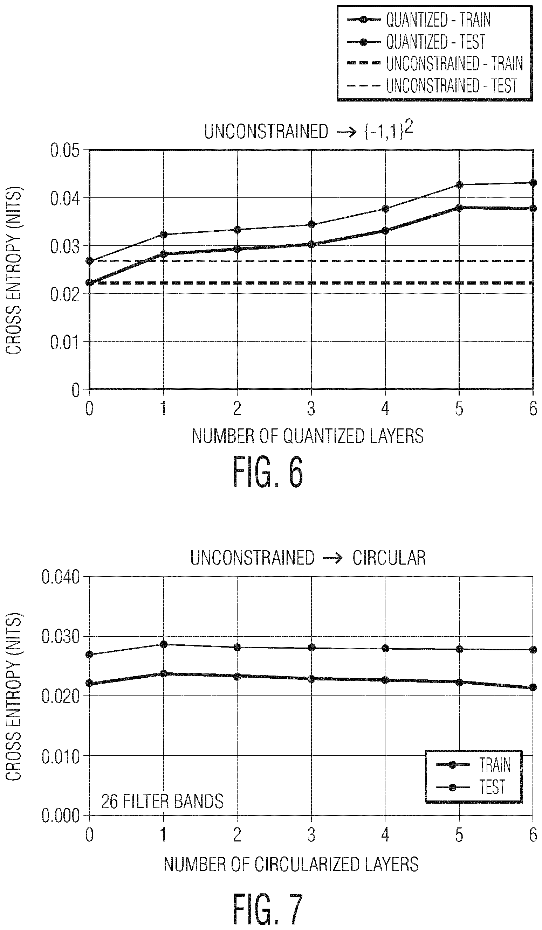

FIG. 3 shows the weight pairs of the 18 output channels of layer 3 of a trained unconstrained TCN before and after binarization with optimized binary quantization levels. Unconstrained weight pairs of layer 3 of a trained TCN are shown as "Xs" and binarized weight pairs before retraining the scale factors s of the 18 output channels of layer 18 are shown as "Os". Each dimension of the plot represents one element of the 2-dimensional weight sub-vectors. The lines are the quantization error vectors. The quantization errors have a large RMS values compared to the sizes of the clouds of unconstrained weight pairs. And, there are outliers with extremely large quantization errors. These large quantization errors and extreme outliers cause a strong increase in the loss function for both train and test data (FIG. 6).

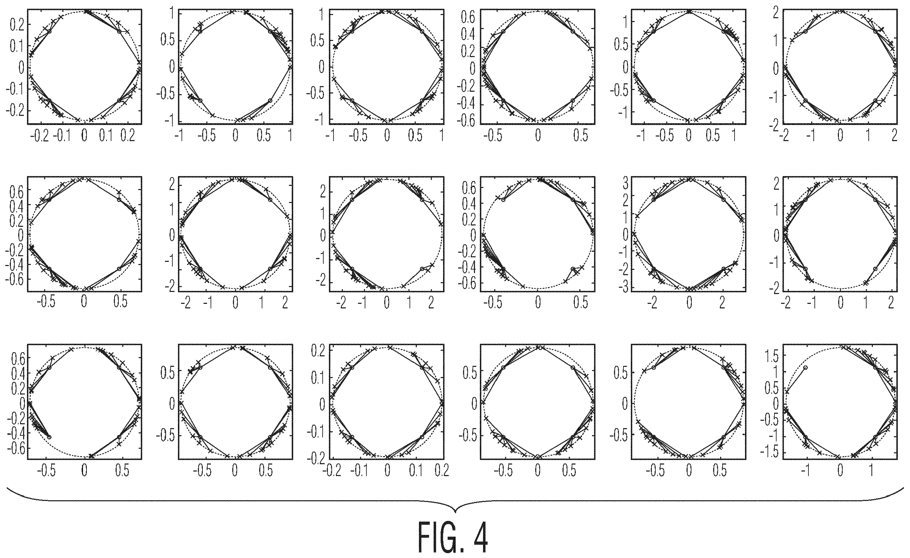

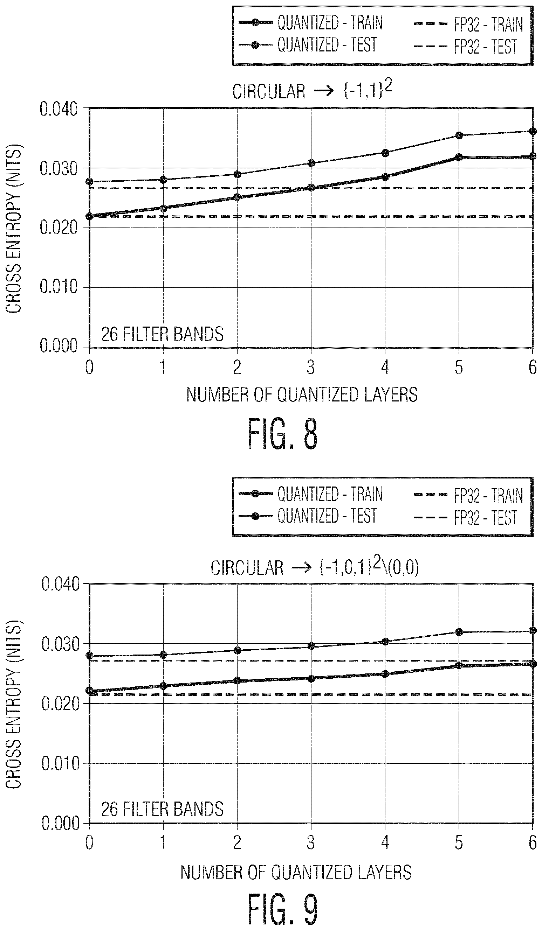

FIG. 4. Illustrates the weight pairs of the 18 output channels of layer 3 of a trained constrained TCN before and after binarization with optimized quantization vectors. Constrained "Circular" weight pairs of layer 3 of a trained TCN shown as "Xs" on the dashed circle and binarized weight pairs before retraining of the scaling factors and biases are shown as "Os". The lines are the quantization error vectors. The quantization errors have small RMS values compared to the circle radii, and there are no outliers with extremely large quantization errors. This results in a smaller increase in the loss function for both train and test data (FIG. 8).

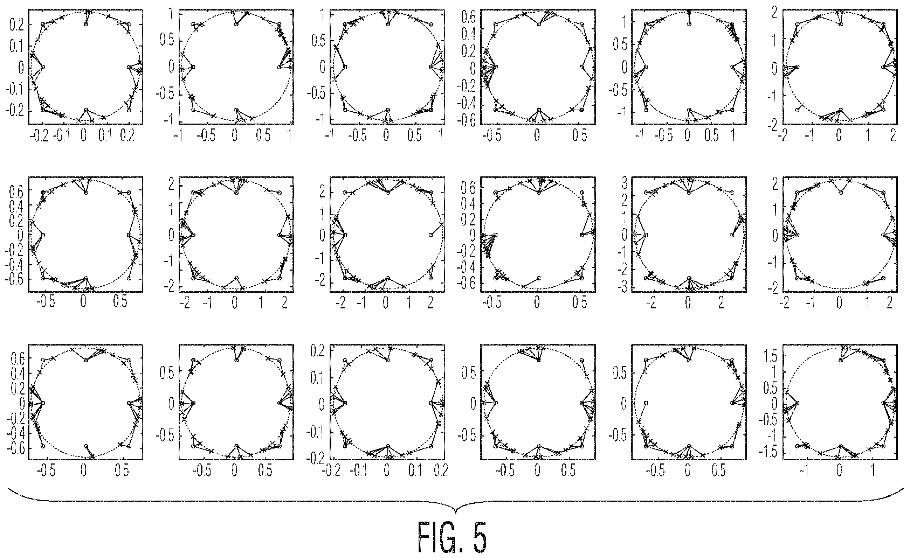

FIG. 5 illustrates the weight pairs of the 18 output channels of layer 3 of the trained constrained TCN before and after reduced ternarization with optimized quantization levels. Constrained "Circular" weight pairs of layer 3 of a trained TCN are shown as "Xs" on the dashed circle and the reduced ternarized weight pairs before retraining of the scaling factors and biases are shown as "Os". The lines are the quantization error vectors. The quantization errors have very small RMS values compared to the circle radii., and there are no outliers with extremely large quantization errors. This results in an even lower increase of the loss function for both train and test data (FIG. 9).

FIG. 6 illustrates how the train and test losses (cross entropy) increases quickly when the layers of a trained unconstrained TCN are successively binarized with intermediate retraining. There was a large variation between different runs, probably caused by occasional unfavorable outliers with extreme quantization errors that could not be repaired by retraining (FIG. 6 illustrates the best result of a couple of runs). This makes direct binarization irreproducible.

FIG. 7 illustrates the train and test losses after constraining successive layers of a trained unconstrained TCN to "Circular" weight pairs with intermediate retraining of the circle radii and biases. The initial circle radii before retraining were optimized for minimum LMS radial quantization errors. The figure provides clear evidence that constraining weight pairs at circles (according to equation 10) does not degrade the expression power of the TCN. Obviously, during training, the "Circular" weight pairs can still "find their way" along the circles towards favorable minima in the loss function "landscape".

FIG. 8 illustrates the train and test losses after binarizing a trained constrained TCN with intermediate retraining. FIG. 9 illustrates the train and test losses after reduced ternarizing a trained constrained TCN with intermediate retraining. Initial angles of "Circular" weight pairs were drawn randomly from a uniform distribution in the interval $(-\pi, \pi]$. FIGs. 8 and 9 provide clear evidence that binarization and reduced ternarization from a trained constrained TCN with "Circular" weight pairs only reduces the expression power by a small (binarization) or very small (reduced ternarization) amount. Contrary to binarization from a trained unconstrained TCN (FIG. 6), different runs gave very reproducible results, probably because of the structural absence of outliers with extreme quantization errors that could not be repaired by retraining.

Nine-element 3x3 convolutional kernels are frequently used in convolutional neural networks (CNN). Because of the odd number of weights in a 3x3 conv kernel, constraining pairs of weights at circles cannot be applied directly. Instead, for binarization triplets of weights can be constrained to spheres. After training, the weight triplets can be binarized to the corners of a cube.

For reduced ternarization this 3-dimensional approach is not efficient, because a highsymmetry pattern $Q^{(3)}$ with cardinality $\left| Q^{(3)} \right| = 2^{\frac{3}{2}K}$ does not exist for $K = 3$. But, there are a few possible compromises.

One is to accept a less favorable pattern $Q^{(3)}$ that requires more bits to address its members, but still benefit from the advantages of quantization from trained "Spherical" weight triplets (low RMS quantization errors and no extreme outliers).

Another is to group kernels that project into the same output channel of the layer into pairs, where the 9 pixels of one kernel get 9 different cosine weights while the 9 pixels of the other kernel get the corresponding 9 sine weights (similar to equation 10), and where all 18 pixels share the same scaling factor, or where all kernel pairs that project into the same output channel of the layer share a single scaling factor.

NNs also commonly use 5x5 and 7x7 conv kernels. The last compromise described for the 3x3 conv kernels may also be applied to 5x5 and 7x7 kernels, and to other groups of kernels with an odd number of pixels.

Another approach is reduced conv kernels. These are square conv kernels with an odd number of pixels from which the central pixel is removed. This may be defined as "reduced conv kernels". The remaining pixels still provide sufficient degrees of freedom to extract local geometry features up to 2nd order (constant, gradient and curvature) from feature maps. For example, the remaining 8 pixels of a reduced 3x3 conv kernel are sufficient to fit all 6 parameters of the local 2nd-order Taylor expansion of the local geometry of the feature map:

$$f_{i,j}(x,y) = a_{i,j} + b_{i,j}^{(x)}(x - x_{i,j}) + b_{i,j}^{(y)}(y - y_{i,j})$$

$$+ \frac{1}{2} c_{i,j}^{(x,x)}(x - x_{i,j})^2 + c_{i,j}^{(x,y)}(x - x_{i,j})(y - y_{i,j}) \qquad (23)$$

$$+ \frac{1}{2} c_{i,j}^{(y,y)}(y - y_{i,j})^2$$

where $x$ and $y$ are the coordinates along 2 orthogonal coordinate axes of the feature map, $x_{i,j}$ and $y_{i,j}$ are the coordinates of the (removed) central pixel, and $f_{i,j}(x,y)$ is a local approximation of a function $f(x, y)$ around that central pixel.

The so-constructed reduced conv kernel has an even number of weights that may be grouped in "Circular" weight pairs (e.g., by pairing weights of opposite pixels relative to the removed central pixel).

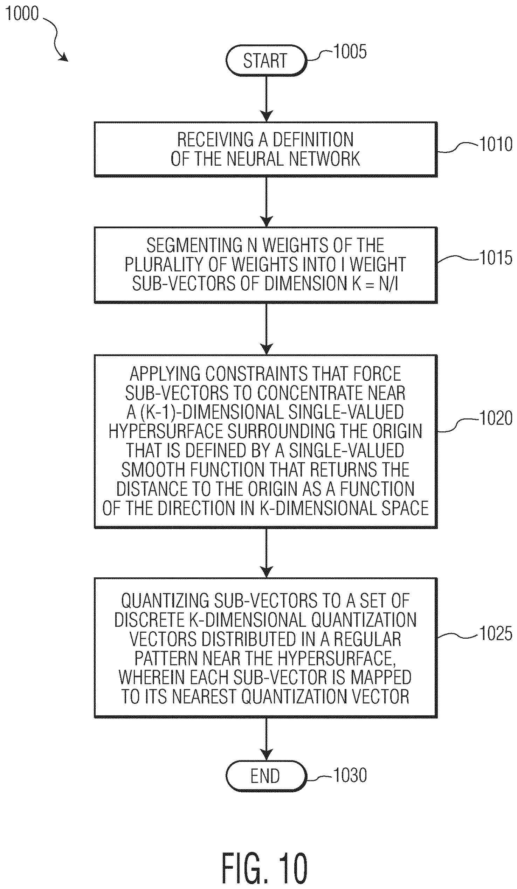

FIG. 10 illustrates a method for producing a plurality of weights for a neural network, including a plurality of layers. The method 1000 starts at 1005, and the method 1000 then receives a definition of the neural network including the number of layers and the size of the layers 1010. Next, the method 1000 trains the neural network using a training data set by the following steps. The method 1000 segments N weights of the plurality of weights into I weight sub-vectors $\vec{w}^{(i)}$ of dimension K = N/I 1015. This is described in greater detail above. Next, the method 1000 applies constraints that force sub-vectors $\vec{w}^{(i)}$ to concentrate near a (K-1)-dimensional single-valued hypersurface surrounding the origin that is defined by a single-valued smooth function that returns the distance to the origin as a function of the direction in K-dimensional space 1020. As described above, the hypersurface may be a hyper-sphere. Further, this may be accomplished as described above. Then the method 1000 quantizes sub-vectors $\vec{w}^{(i)}$ to a set of discreet K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$ 1025. This quantization may be determined using the optimizations described above. Further, the quantization may include binarization, ternarization, or reduced ternarization as described above. Further, constrained weights may be generated for various sized kernels as described above. The method 1000 may then end 1030.

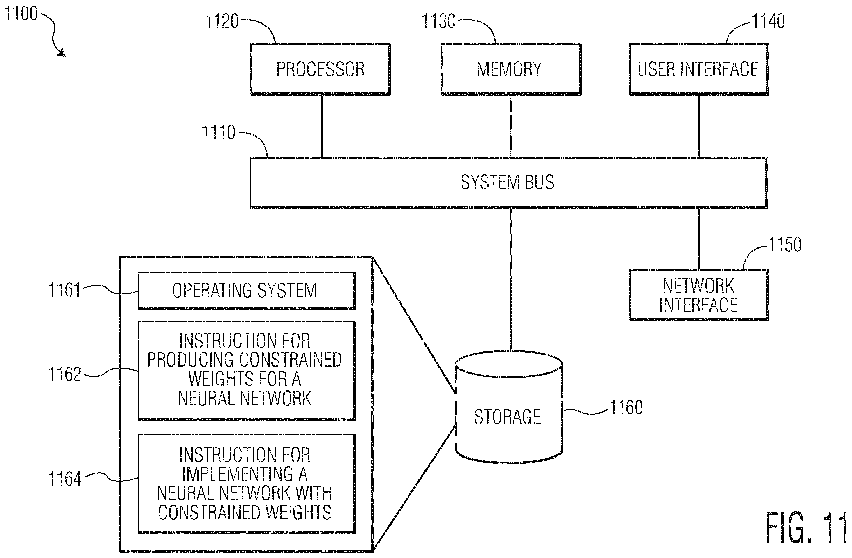

FIG. 11 illustrates an exemplary hardware diagram 1100 for implementing the method of generating the constrained weights for the neural network or for implementing the neural network. As illustrated, the device 1100 includes a processor 1120, memory 1130, user interface 1140, network interface 1150, and storage 1160 interconnected via one or more system buses 1110. It will be understood that FIG. 11 constitutes, in some respects, an abstraction and that the actual organization of the components of the device 1100 may be more complex than illustrated.

The processor 1120 may be any hardware device capable of executing instructions stored in memory 1130 or storage 1160 or otherwise processing data. As such, the processor may include a microprocessor, microcontroller, graphics processing unit (GPU), field programmable gate array (FPGA), application-specific integrated circuit (ASIC), neural network processors, machine learning processors, or other similar devices.

The memory 1130 may include various memories such as, for example L1, L2, or L3 cache or system memory. As such, the memory 1130 may include static random-access memory (SRAM), dynamic RAM (DRAM), flash memory, read only memory (ROM), or other similar memory devices.

The user interface 1140 may include one or more devices for enabling communication with a user as needed. For example, the user interface 1140 may include a display, a touch interface, a mouse, and/or a keyboard for receiving user commands. In some embodiments, the user interface 1140 may include a command line interface or graphical user interface that may be presented to a remote terminal via the network interface 1150.

The network interface 1150 may include one or more devices for enabling communication with other hardware devices. For example, the network interface 1150 may include a network interface card (NIC) configured to communicate according to the Ethernet protocol or other communications protocols, including wireless protocols. Additionally, the network interface 1150 may implement a TCP/IP stack for communication according to the TCP/IP protocols. Various alternative or additional hardware or configurations for the network interface 1150 will be apparent.

The storage 1160 may include one or more machine-readable storage media such as readonly memory (ROM), random-access memory (RAM), magnetic disk storage media, optical storage media, flash-memory devices, or similar storage media. In various embodiments, the storage 1160 may store instructions for execution by the processor 1120 or data upon with the processor 1120 may operate. For example, the storage 1160 may store a base operating system 1161 for controlling various basic operations of the hardware 1100. The storage 1162 may include instructions for producing constrained weights for a neural network as described above. Further, the storage 1164 may include instructions for implementing a neural network with constrained weights.

It will be apparent that various information described as stored in the storage 1160 may be additionally or alternatively stored in the memory 1130. In this respect, the memory 1130 may also be considered to constitute a "storage device" and the storage 1160 may be considered a "memory." Various other arrangements will be apparent. Further, the memory 1130 and storage 1160 may both be considered to be "non-transitory machine-readable media." As used herein, the term "non-transitory" will be understood to exclude transitory signals but to include all forms of storage, including both volatile and non-volatile memories.

While the host device 1100 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1100 is implemented in a cloud computing system, the various hardware components may belong to separate physical systems. For example, the processor 1120 may include a first processor in a first server and a second processor in a second server.

The method for producing constrained weights provides a technological advancement in neural networks. The embodiments for producing constrained weights described above allow for much smaller weights which may greatly decrease the storage required for the weights and hence the neural network and may reduce the computational requirements because of smaller weights and simpler operations (e.g. only additions and subtractions, but no multiplications). This will allow for neural networks to be deployed in more situations, especially those that have limited storage and computing capability, or that must run on a strongly constrained energy budget.

Various embodiments relate to a method for producing a plurality of weights for a neural network, wherein the neural network includes a plurality of layers, including: receiving a definition of the neural network including the number of layers and the size of the layers; and training the neural network using a training data set including: segmenting N weights of the plurality of weights into I weight sub-vectors $\vec{w}^{(i)}$ of dimension K = N/I; applying constraints that force sub-vectors $\vec{w}^{(i)}$ to concentrate near a (K-1)-dimensional single-valued hypersurface surrounding the origin; and quantizing sub-vectors $\vec{w}^{(i)}$ to a set of discrete K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

**Claims**

1. A method for producing a plurality of weights for a neural network, wherein the neural network includes a plurality of layers, comprising:

   receiving a definition of the neural network including the number of layers and the size of the layers; and
   training the neural network using a training data set including:

   segmenting N weights of the plurality of weights into I weight sub-vectors $\vec{w}^{(i)}$ of dimension K = N/I;
   applying constraints that force sub-vectors $\vec{w}^{(i)}$ to concentrate near a (K-1)-dimensional single-valued hypersurface surrounding the origin; and
   quantizing sub-vectors $\vec{w}^{(i)}$ to a set of discreet K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

2. The method of claim 1, wherein the hypersurface is a hyper-sphere centered at the origin.

3. The method of claim 2, wherein the single-valued hypersurface surrounding the origin is defined by a single-valued smooth function that returns the distance to the origin as a function of the direction in K-dimensional space.

4. The method of any preceding claim, wherein quantizing sub-vectors $\vec{w}^{(i)}$ includes binarizing each element the sub-vectors $\vec{w}^{(i)}$.

5. The method of any preceding claim , wherein quantizing sub-vectors $\vec{w}^{(i)}$ includes applying reduced ternarization of each element the sub-vectors $\vec{w}^{(i)}$ to produce quantization vectors $\vec{q}^{(i)}$ wherein $\vec{q}^{(i)} \in Q^{(K)}$, $Q^{(K)} \subset Q_T^{(K)}$ , and $Q_T^{(K)} = \{-1, 0, +1\}^K$ and wherein only members $\vec{q} \in Q_T^{(K)}$ are retained in $Q^{(K)}$ that are close to a common hypersphere centered at the origin .

6. The method of claim 5, wherein
   K = 2, and,

$$Q^{(2)} = \{-1, 0, +1\}^2 \setminus \{0, 0\}.$$

7. The method of claim 6, further comprising encoding the values $(q_1, q_2)$ of $\{(1,0), (1,1), (0, 1), (-1, 1), (-1,0), (-1,-1), (0,-1), (1,-1)\}$ to three bit representations $((b_2 b_1 b_0)$ of $\{101, 011, 111, 010, 110, 000, 100, 001\}$ respectively.

8. The method of claim 7, wherein the following pseudo code calculates the contribution of a 2-dimensional input sub-vector $\vec{x}$ to the accumulating dot-product variable sum:
   if $b_2$=0 then

   if $b_1$=0 then sum=sum-$x_1$ else sum=sum+$x_1$ end
   if $b_0$=0 then sum=sum-$x_0$ else sum=sum+$x_0$ end
   elseif $b_1$=$b_0$ then
   if $b_1$=0 then sum=sum-$x_1$ else sum=sum+$x_1$ end

else
if $b_0=0$ then sum=sum-$x_0$ else sum=sum+$x_0$ end end.

9. The method of any of claims 5 to 8, wherein
K = 4, and,

$$Q^{(4)} = \{-1, 0, +1\}^4 \backslash \{(0,0,0,0), \{-1, +1\}^4\}.$$

10. The method of any preceding claim, wherein

K = 2,
the neural network includes a plurality of MxM kernels, where M is an odd number, and
MxM sub-vectors $\vec{w}^{(2)}$ each include MxM first sine weighted elements from a first MxM kernel and second cosine weighted elements from a second MxM kernel.

11. The method of any preceding claim, wherein

the neural network includes an MxM kernel, where M is an odd number,
the central value of the MxM kernel is removed, and
the remaining MxM-1 values are grouped into (MxM-1)/2 sub-vectors $\vec{w}^{(2)}$ consisting of pairs of opposite values about the central value.

12. A data processing system comprising instructions embodied in a non-transitory computer readable medium, the instructions producing a plurality of weights for a neural network, wherein the neural network includes a plurality of layers, the instructions, comprising:

instructions for receiving a definition of the neural network including the number of layers and the size of the layers; and
instructions for training the neural network using a training data set including:

instructions for segmenting N weights of the plurality of weights into I weight sub-vectors $\vec{w}^{(i)}$ of dimension K = N/I;
instructions for applying constraints that force sub-vectors $\vec{w}^{(i)}$ to concentrate near a (K-1)-dimensional single-valued hypersurface surrounding the origin; and
instructions for quantizing sub-vectors $\vec{w}^{(i)}$ to a set of discreet K-dimensional quantization vectors $\vec{q}^{(i)}$ distributed in a regular pattern near the hypersurface, wherein each sub-vector $\vec{w}^{(i)}$ is mapped to its nearest quantization vector $\vec{q}^{(i)}$.

13. The data processing system of claim 12, wherein the hypersurface is a hyper-sphere centered at the origin.

14. The data processing system of claim 13, wherein single-valued hypersurface surrounding the origin is defined by a single-valued smooth function that returns the distance to the origin as a function of the direction in K-dimensional space.

15. The data processing system of claim 12, wherein instructions for quantizing sub-vectors $\vec{w}^{(i)}$ include instructions for binarizing each element of the sub-vectors $\vec{w}^{(i)}$.

FIG. 1A

FIG. 1B

FIG. 1C

FIG. 2

FIG. 3

FIG. 4

FIG. 5

FIG. 6

FIG. 7

FIG. 8

FIG. 9

1000

START —1005

RECEIVING A DEFINITION
OF THE NEURAL NETWORK —1010

SEGMENTING N WEIGHTS OF THE
PLURALITY OF WEIGHTS INTO I WEIGHT
SUB-VECTORS OF DIMENSION K = N/I —1015

APPLYING CONSTRAINTS THAT FORCE
SUB-VECTORS TO CONCENTRATE NEAR
A (K-1)-DIMENSIONAL SINGLE-VALUED
HYPERSURFACE SURROUNDING THE ORIGIN
THAT IS DEFINED BY A SINGLE-VALUED
SMOOTH FUNCTION THAT RETURNS THE
DISTANCE TO THE ORIGIN AS A FUNCTION
OF THE DIRECTION IN K-DIMENSIONAL SPACE —1020

QUANTIZING SUB-VECTORS TO A SET OF
DISCRETE K-DIMENSIONAL QUANTIZATION
VECTORS DISTRIBUTED IN A REGULAR
PATTERN NEAR THE HYPERSURFACE,
WHEREIN EACH SUB-VECTOR IS MAPPED
TO ITS NEAREST QUANTIZATION VECTOR —1025

END —1030

FIG. 10

FIG. 11

EP 4 145 354 A1

Europäisches
Patentamt

European
Patent Office

Office européen
des brevets

# EUROPEAN SEARCH REPORT

Application Number

EP 22 19 2340

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/258071 A1 (INTEL CORP [US]; YAO ANBANG [CN] ET AL.) 30 December 2020 (2020-12-30) * abstract, description pages 60-61, 63-64, 73-79, 83; claim 1; table 1 * | 1-15 | INV. G06N3/08 G06N3/04 |
| A | YUNHUI GUO: "A Survey on Methods and Theories of Quantized Neural Networks", ARXIV.ORG, CORNELL UNIVERSITY LIBRARY, 201 OLIN LIBRARY CORNELL UNIVERSITY ITHACA, NY 14853, 13 August 2018 (2018-08-13), XP081098819, * abstract; sections 3, 4.1, 5 * | 1-15 | |
| A | LIANG TAILIN ET AL: "Pruning and quantization for deep neural network acceleration: A survey", NEUROCOMPUTING, ELSEVIER, AMSTERDAM, NL, vol. 461, 21 July 2021 (2021-07-21), pages 370-403, XP086797049, ISSN: 0925-2312, DOI: 10.1016/J.NEUCOM.2021.07.045 [retrieved on 2021-07-21] * abstract; sections 1, 4, 5.2 * | 1-15 | TECHNICAL FIELDS SEARCHED (IPC) G06N |

The present search report has been drawn up for all claims

| Place of search | Date of completion of the search | Examiner |
|---|---|---|
| The Hague | 20 December 2022 | Tebbal Barracosa, B |

EPO FORM 1503 03.82 (P04C01)

## ANNEX TO THE EUROPEAN SEARCH REPORT
## ON EUROPEAN PATENT APPLICATION NO.

EP 22 19 2340

20-12-2022

| Patent document cited in search report | Publication date | Patent family member(s) | | Publication date |
|---|---|---|---|---|
| WO 2020258071 A1 | 30-12-2020 | US | 2022129759 A1 | 28-04-2022 |
| | | WO | 2020258071 A1 | 30-12-2020 |

EPO FORM P0459